# EUROPÄISCHE PATENTSCHRIFT

(11) **EP 4 591 697 B1**
(45) Veröffentlichungstag und Bekanntmachung des Hinweises auf die Patenterteilung: **09.09.2026**
(21) Anmeldenummer: 25154036.5
(22) Anmeldetag: 27.01.2025
(51) Int. Cl.: A01D 34/73

(54) **MÄHORGAN EINES MÄHWERKS**
MOWING DEVICE OF A MOWING DEVICE
ORGANE DE COUPE D'UNE FAUCHEUSE

(30) Priorität: 29.01.2024 DE 102024102487
(43) Veröffentlichungstag der Anmeldung: 30.07.2025
(73) Patentinhaber: CLAAS Saulgau GmbH, 88348 Bad Saulgau (DE)
(72) Erfinder: Speer, Christian, 78267 Aach (DE); Fischer, Josef, 88400 Biberach (DE)

(56) Entgegenhaltungen:
- EP-A1- 2 727 450
- EP-B2- 3 081 064
- DE-A1- 102015 214 051
- US-A1- 2005 138 913
- US-A1- 2013 055 546
- US-B2- 10 362 730

## Beschreibung

Die Erfindung betrifft ein Mähorgan eines Mähwerks.

DE 1 945 760 U offenbart ein Mähwerk einer landwirtschaftlichen Erntemaschine mit mehreren in einer Reihe nebeneinander angeordneten Mähorganen. Die Mähorgane weisen als Schneidwerkzeuge Messerscheiben auf. Die Messerscheiben verfügen, verteilt über den Umfang derselben, mehrere Schneidspitzen.

EP 3 942 919 A1 offenbart eine Messerscheibe für ein Mähorgan eines Mähwerkzeugs, die wiederum über den Umfang verteilt mehrere Schneidspitzen aufweist.

EP 3 143 865 B1 offenbart ein Mähwerk mit mehreren nebeneinander angeordneten Mähorganen, wobei hier die Mähorgane einen Messerträger aufweisen, an welchem diametral gegenüberliegend zwei Messer befestigt sind. Die Messerträger mit den daran befestigten Messern bilden keine Messerscheiben aus.

Der Austausch einer defekten Messerscheibe an einem Mähorgan eines Mähwerks ist bislang relativ aufwendig. Hierzu muss das Mähorgan mithilfe von Werkzeugen zerlegt werden, um schließlich einen Austausch der Messerscheibe zu ermöglichen.

Aus US 2013/0055546 A1 ist eine Schnellkupplungsvorrichtung zum Verbinden eines Messers mit einem rotierenden Scheibenschneidkopf, bestehend aus einem federbelasteten Verbinder und einer Verriegelungsvorrichtung, die im eingebauten Zustand ein unbeabsichtigtes Lösen des Messers vom Schneidkopf verhindert. Der Schnellverbinder mit Verriegelungsvorrichtung ersetzt eine herkömmliche Schraubverbindung und reduziert den Zeitaufwand für das Entfernen und Wiedereinbauen eines Messers an einem rotierenden Schneidkopf im Vergleich zu einem verschraubten Messerverbinder.

Es besteht Bedarf an einem Mähorgan mit einer Messerscheibe, bei welchem die Messerscheibe mit geringerem Aufwand einfach gewechselt werden kann.

Hiervon ausgehend liegt der vorliegenden Erfindung die Aufgabe zugrunde, ein neuartiges Mähorgan eines Mähwerks zu schaffen.

Diese Aufgabe wird durch ein Mähorgan eines Mähwerks nach Anspruch 1.

Das erfindungsgemäße Mähorgan weist eine Messerscheibe, einen Messerflansch, eine Druckscheibe und mindestens ein Federelement auf, wobei der Messerflansch an einer ersten Seite der Messerscheibe angeordnet ist, und wobei die Druckscheibe an einer zweiten der Messerscheibe angeordnet ist.

Das mindestens eine Federelement drückt den Messerflansch und die Druckscheibe gegeneinander und klemmt so die Messerscheibe zwischen dem Messerflansch und der Druckscheibe, und wobei zum Austausch der Messerscheibe der Messerflansch und die Druckscheibe entgegen der Federkraft des mindestens einen Federelements auseinander drückbar sind.

Bei dem erfindungsgemäßen Mähorgan ist die Messerscheibe zwischen dem Messerflansch und der Druckscheibe geklemmt, wobei zum Austausch der Messerscheibe diese Klemmung aufgehoben wird, indem der Messerflansch und die Druckscheibe entgegen der Federkraft des mindestens einen Federelements auseinander gedrückt werden. Das Auseinanderdrücken erfolgt vorzugsweise mithilfe eines Messerscheiben-Wechselwerkzeugs. Der Austausch einer Messerscheibe kann mit einigen wenigen Handgriffen erfolgen.

Vorzugsweise weist das erfindungsgemäße Mähorgan weiterhin eine Hakenscheibe und ein Druckstück auf, wobei die Hakenscheibe und der Messerflansch miteinander verbunden sind, wobei das Druckstück und die Druckscheibe miteinander verbunden sind, und wobei ein erstes Federelement an einem Abschnitt, der sich durch eine Ausnehmung der Messerscheibe hindurch erstreckt, mit dem Messerflansch und der Hakenscheibe verbunden ist. Ein zweites Federelement kann zwischen dem Messerflansch und dem Druckstück angeordnet werden. Dies ermöglicht einen vorteilhaft einfachen und schnellen Austausch einer Messerscheibe am Mähorgan. Vorzugsweise drückt das erste Federelement und/oder das zweite Federelement die Druckscheibe gegen den Messerflansch. Die Klemmung der Messerscheibe zwischen Messerflansch und Druckscheibe erfolgt über mindestens eines dieser Federelemente.

Vorzugsweise erstreckt sich die Hakenscheibe mit einem Haken durch eine Ausnehmung in dem Druckstück hindurch, wobei dann, wenn an dem Haken ein Messerscheiben-Wechselwerkzeug angreift, sich das Messerscheiben-Wechselwerkzeug an der Hakenscheibe und dem Druckstück abstützt, und wobei durch Betätigen des Messerscheiben-Wechselwerkzeug eine Relativbewegung zwischen der Hakenscheibe und dem Druckstück und ferner eine Relativbewegung zwischen dem Messerflansch und der Druckscheibe bereitstellbar ist.

Über die Relativbewegung zwischen dem Messerflansch und der Druckscheibe können zum Austausch der Messerscheibe der Messerflansch und die Druckscheibe entgegen der Federkraft des mindestens einen Federelements auseinander gedrückt werden. Dies erlaubt ein besonders vorteilhaftes, einfaches Austauschen einer Messerscheibe am erfindungsgemäßen Mähorgan.

Vorzugsweise weist die Messerscheibe radiale Vorsprünge auf, wobei auch der Messerflansch radiale Vorsprünge aufweist, wobei in einer ersten Relativposition zwischen Messerscheibe und Messerflansch die radialen Vorsprünge des Messerflanschs die radialen Vorsprünge der Messerscheibe überdecken, und wobei in einer zweiten Relativposition zwischen Messerscheibe und Messerflansch die radialen Vorsprünge des Messerflanschs die radialen Vorsprünge der Messerscheibe nicht überdecken. In der ersten Relativposition kann die Messerscheibe nicht vom Messerflansch entfernt werden. In der zweiten Relativposition der Messerscheibe hingegen kann dieselbe vom Messerflansch entfernt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: eine perspektivische Ansicht eines Mähwerk mit erfindungsgemäßen Mähorgangen;
- Fig. 2: eine Draufsicht auf ein erfindungsgemäßes Mähorgan;
- Fig. 3: eine Unteransicht eines erfindungsgemäßes Mähorgans,
- Fig. 4: den Querschnitt IV-IV der Fig. 2;
- Fig. 5: ein Detail eines Querschnitts analog zu Fig. 4;
- Fig. 6: eine Explosionsdarstellung eines erfindungsgemäßes Mähorgans,
- Fig. 7a bis 7d: eine Abfolge beim Wechsel einer Messerscheibe an einem erfindungsgemäßen Mähorgan,
- Fig. 8: ein Messerscheiben-Wechselwerkzeug,
- Fig. 9: eine Messerscheibe eines weiteren Mähorgans des Mähwerks,
- Fig. 10: ein Detail der Fig. 9.

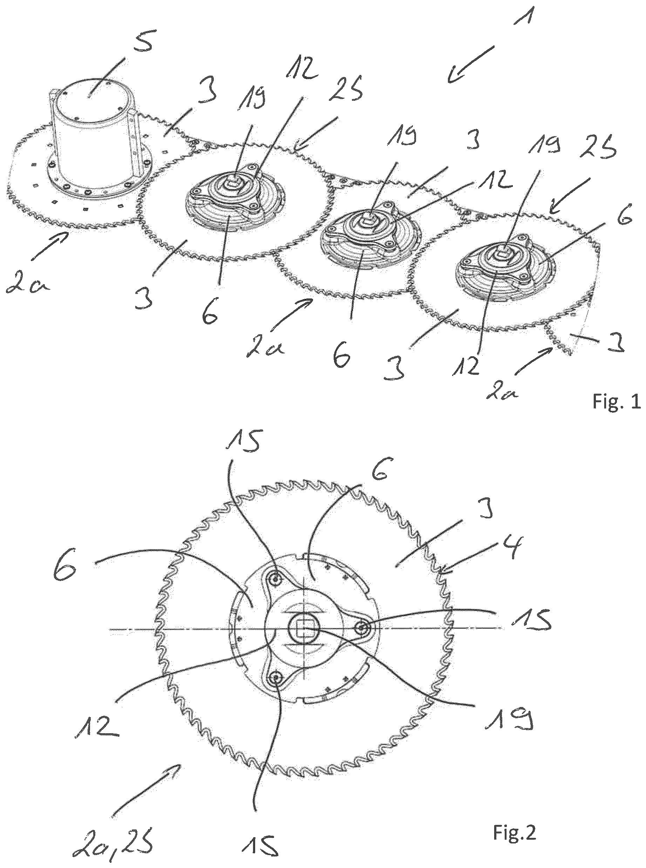

Fig. 1 zeigt einen Ausschnitt aus einem Mähwerk 1 im Bereich mehrerer Mähorgane 2a, 2b. Die Mähorgane 2a, 2b sind unter Ausbildung eines Mähbalkens in einer Reihe nebeneinander positioniert.

Die Mähorgane 2a, 2b verfügen über Messerscheiben 3. Gemäß Fig. 1 überlappen sich die Messerscheiben 3 unmittelbar benachbarter Mähorgane 2a, 2b in einer Projektion, wobei die Messerscheiben 3 der Mähorgane 2a in einer ersten, unteren Ebene und die Messerscheiben 3 der Mähorgane 2b in einer zweiten, oberen Ebene angeordnet sind, sodass die sich überlappenden Mähscheiben 3 der unmittelbar benachbarten Mähorgane 2a, 2b frei rotieren können. Die Messerscheiben 3 tragen an ihrem Umgang mehrere Schneidspitzen 4. Dem in Fig. 1 gezeigten äußeren Mähorgan 2a ist ein Antrieb 5 zugeordnet. Der Antrieb 5 dient dem Antreiben aller Mähorgane 2a, 2b über ein nicht gezeigtes Getriebe.

Fig. 2 bis 5 zeigen den Aufbau eines erfindungsgemäßen Mähorgans 2a, 2b, nämlich in Fig. 1 eines Mähorgans 2a, 2b, welchem der Antrieb 5 nicht zugeordnet ist.

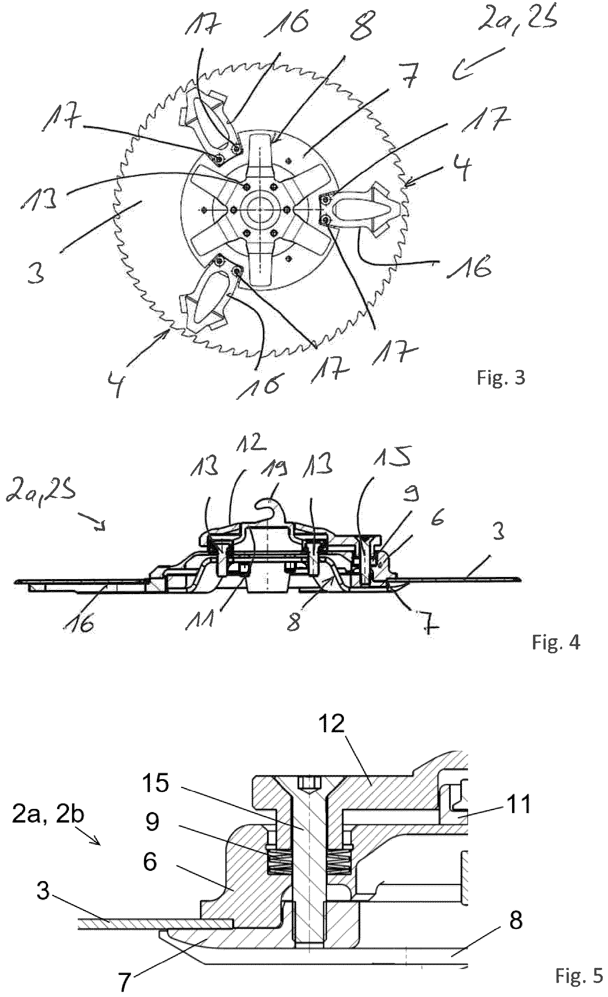

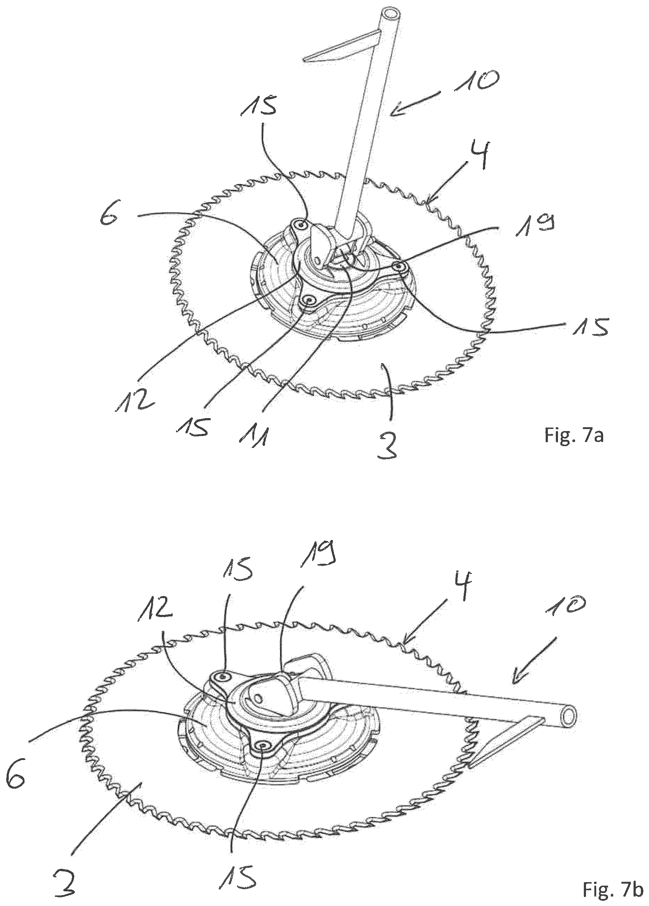

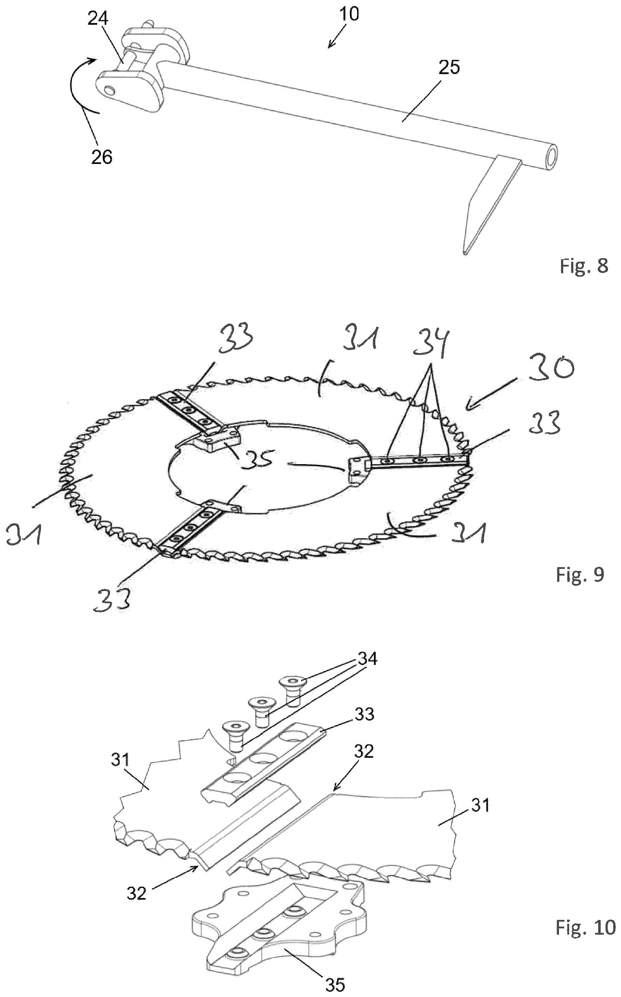

Das Mähorgan 2a, 2b verfügt neben der Messerscheibe 3 über einen Messerflansch 6 sowie über eine Druckscheibe 7. Der Messerflansch 6 ist an einer ersten, oberen Seite der Messerscheibe 3 angeordnet (siehe Fig. 2), das Druckstück 7 ist an einer zweiten, unteren Seite der Messerscheibe 3 positioniert (siehe Fig. 3). Ferner weist das Mähorgan 2a, 2b mindestens ein Federelement 8, 9 auf, wobei das mindestens eine Federelement 8, 9 den Messerflansch 6 und die Druckscheibe 7 gegeneinanderdrückt und so die Messerscheibe 3 zwischen dem Messerflansch 6 und der Druckscheibe 7 klemmt. Zum Austausch der Messerscheibe 3 sind der Messerflansch 6 und die Druckscheibe 7 entgegen der Federkraft des mindestens einen Federelements 8, 9 auseinanderdrückbar, wobei hierzu ein Messerscheiben-Wechselwerkzeug 10 zum Einsatz kommt. Fig. 8 zeigt das Messerscheiben-Wechselwerkzeug 10 in Alleindarstellung. Fig. 7a bis 7c zeigen dasselbe beim Wechsel einer Messerscheibe 3.

In der bevorzugten Ausführungsform des erfindungsgemäßen Mähorgans 2a, 2b weist dasselbe neben der Messerscheibe 3, dem Messerflansch 6 und dem Druckstück 7 und dem mindestens einem Federelement 8, 9 eine Hakenscheibe 11 und ein Druckstück 12 auf. Die Hakenscheibe 11 sowie das Druckstück 12 sind zusammen mit dem Messerflansch 6 auf der ersten, oberen Seite der Messerscheibe 3 angeordnet. Die Druckscheibe 7 ist auf der gegenüberliegenden zweiten Seite der Messerscheibe 3 positioniert.

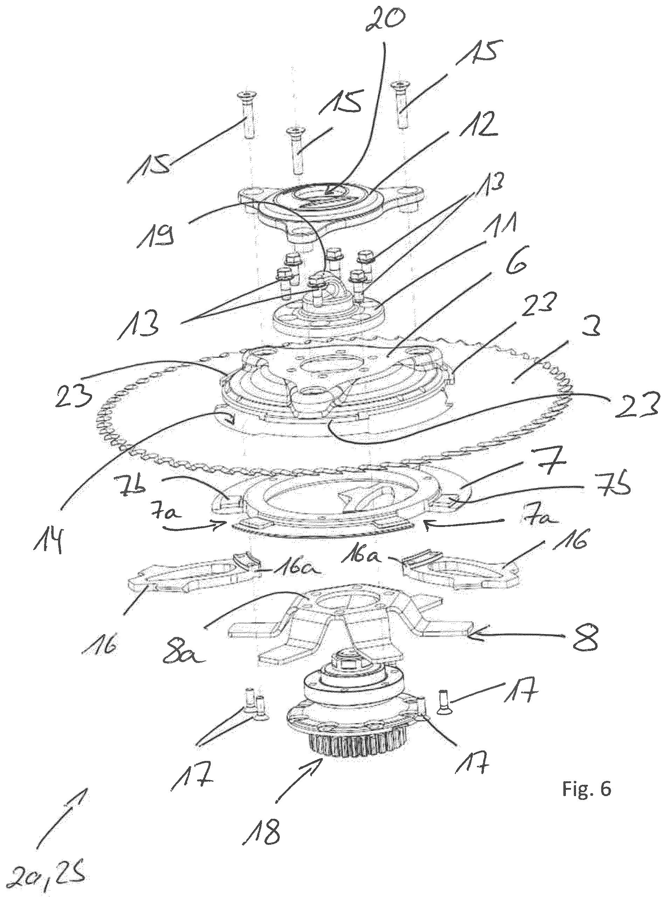

Die Hakenscheibe 11 und der Messerflansch 6 sind miteinander verbunden, vorzugsweise über die in Fig. 6 gezeigten Schrauben 13, die zusätzlich das erste Federelement 8 mit dem Messerflansch 6 verbinden, und zwar an einem Abschnitt 8a des ersten Federelements 8, der sich durch eine Ausnehmung 14 in der Messerscheibe 3 hindurch erstreckt und im montierten Zustand auf der ersten, oberen Seite der Messerscheibe 3 angeordnet ist.

Das Druckstück 12 ist mit der Druckscheibe 7 verbunden, und zwar über die in Fig. 6 gezeigten Schrauben 15. Die Schrauben 15 erstrecken sich dabei durch den Messerflansch 6 hindurch, und zwar auch durch die zweiten Federelemente 9 (siehe Fig. 5), wobei die zweiten Federelemente 9 zwischen dem Messerflansch 6 und dem Druckstück 12 positioniert sind.

Fig. 3, 6 zeigt weiterhin Räumorgane 16 des jeweiligen Mähorgans 2a, 2b. Die Räumorgane 16 sind über Schrauben 17 am Messerträger 6 montiert, wobei diejenigen radial inneren Abschnitte 16a der Räumorgane 16, die über die Schrauben 17 am Messerflansch 6 befestigt sind, in Ausnehmungen 7a in der Druckscheibe 7 eingreifen.

Fig. 6 zeigt weiterhin ein Antriebszahnrad 18 für das jeweilige Mähorgan 2a, 2b, um die Messerscheibe 3 des Mähorgans 2a, 2b anzutreiben.

Das erste Federelement 8 drückt die Druckscheibe 7 von unten gegen den Messerflansch 6. Das zweite Federelement 9 drückt den Messerflansch 6 von oben gegen die Druckscheibe 7. Hierdurch wird die Messerscheibe 3 mit einem radial inneren Randabschnitt zwischen dem Messerflansch 6 und der Druckscheibe 7 geklemmt. Dies bewirkt ferner eine Drehmomentabstützung.

Die Hakenscheibe 11 erstreckt sich mit einem Haken 19 durch eine Ausnehmung 20 in dem Druckstück 12 durch dasselbe hindurch.

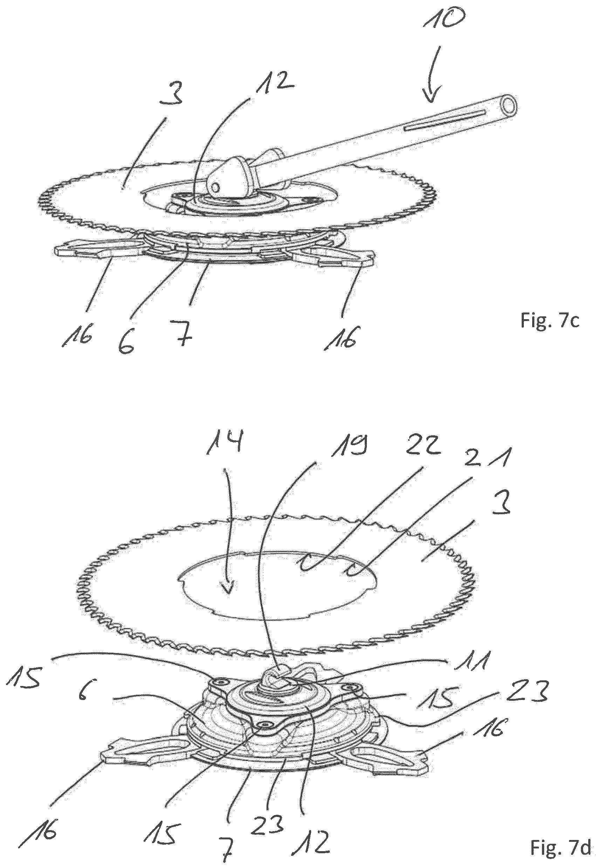

Dann, wenn an dem Haken 19 im Sinne der Fig. 7a, 7b und 7c das Messerscheiben-Wechselwerkzeug 10 angreift, stützt sich das Messerscheiben-Wechselwerkzeug 10 einerseits an der Hakenscheibe 11 und andererseits an dem Druckstück 12 ab. Über eine Schwenkbewegung des Messerscheiben-Wechselwerkzeugs 10 aus der in Fig. 7a gezeigten Position in die in Fig. 7b, 7c gezeigte Position wird eine Relativbewegung zwischen der Hakenscheibe 11 und dem Druckstück 12 und ferner eine Relativbewegung zwischen dem Messerflansch 6 und der Druckscheibe 7 bereitgestellt, um Messerflansch 6 und Druckscheibe 7 entgegen der Federkraft des mindestens einen Federelements 8, 9 auseinanderzudrücken und so die Klemmung der Messerscheibe 3 zwischen dem Messerflansch 6 und der Druckscheibe 7 aufzuheben.

Wie am besten Fig. 7d entnommen werden kann, weist die Messerscheibe 3 an ihrem die Ausnehmung 14 begrenzenden, radial inneren Rand Rücksprünge 21 und sich nach radial innen erstreckende, radiale Vorsprünge 22 auf. Auch der Messerflansch 6 weist radiale Vorsprünge 23 auf. Die Vorsprünge 22 und Rücksprünge 21 bewirken eine weitere Drehmomentabstützung.

In einer ersten Relativposition zwischen der Messerscheibe 3 und dem Messerflansch 6 überdecken die radialen Vorsprünge 23 des Messerflanschs 6 die radialen Vorsprünge 22 der Messerscheibe 3. In diesem Fall ist dann die Messerscheibe 3 formschlüssig am Messerflansch 6 gehalten, sodass die Messerscheibe 3 nicht von dem Messerflansch 6 entfernt werden kann.

Durch Verdrehen der Messerscheibe 3 in Umfangsrichtung ist die Messerscheibe 3 in eine zweite Relativposition zum Messerflansch 6 überführbar. In der zweite Relativposition zwischen der Messerscheibe 3 und dem Messerflansch 6 überdecken die radialen Vorsprünge 23 des Messerflanschs 6 die radialen Vorsprünge 22 der Messerscheibe nicht sondern ragen in die Rücksprünge 21 hinein, wobei dann in dieser zweiten Relativposition die Messerscheibe 3 gemäß Fig. 7c, 7d vom Messerflansch 6 entfernt werden kann, um dieselbe gegen eine neue Messerscheibe 3 auszutauschen.

Das Messerscheiben-Wechselwerkzeug 10 verfügt über einen Bolzen 24, der in Eingriff mit dem Rasthaken 19 der Rastscheibe 11 gebracht werden kann. Durch Verschwenken des Messerscheiben-Wechselwerkzeugs 10 mit Hilfe eines Griffs 25 desselben erfolgt eine Schwenkbewegung des Messerscheiben-Wechselwerkzeugs 10 um den Bolzen 24 in Richtung des Pfeils 26, um das Messerscheiben-Wechselwerkzeug 10 vom Zustand der Fig. 7a in den Zustand der Fig. 7b zu überführen und so die Klemmung der Messerscheibe 3 zwischen dem Messerflansch 6 und der Druckscheibe 7 aufzuheben und so letztendlich einen Austausch derselben zu ermöglichen. Das Messerscheiben-Wechselwerkzeug 10 rastet in seiner Endposition der Fig. 7b, 7c ein und erlaubt einen einfachen Wechsel der Messerscheibe 3. Darauffolgend kann das Messerscheiben-Wechselwerkzeug 10 wieder gelöst werden.

Wie am besten Fig. 6 entnommen werden kann, weist die Druckscheibe 7 axiale Vorsprünge 7b auf. Dann, wenn wenigstens ein Federelement 8, 9 die Klemmung der Messerscheibe 3 zwischen dem Messerflansch 6 und der Druckscheibe 7 bewirkt, greifen diese axialen Vorsprünge 7b der Druckscheibe 7 in die Rücksprünge 21 der Messerscheibe 3 ein. Die Vorsprünge 7b bewirken im Formschluss mit seitlichen Rändern der Rücksprünge 21 eine weitere Drehmomentabstützung.

Fig. 9, 10 zeigen Details einer alternativen Messerscheibe 30, die bevorzugt im Bereich der äußeren Mähorgane eines Mähwerks 1 zum Einsatz kommen kann, insbesondere im Bereich desjenigen Mähorgans 2a, im Bereich dessen der Antrieb 5 verbaut ist. Die Messerscheibe 30 der Fig. 9 ist aus drei Segmenten 31 zusammengesetzt, wobei die Segmente 31 aneinander zugewandten Trennstellen 32 miteinander verbunden sind. Diese Verbindung der Segmente 31 an den sich gegenüberliegenden Trennstellen 32 erfolgt mithilfe eines Klemmstücks 33, welches über Schrauben 34 mit einem Räumorgan 35 verschraubt ist und hierbei benachbarte Trennstellen 32 zweier aneinander angrenzender Segmente 31 der Mähscheibe 30 zwischen dem Klemmstück 33 und dem Räumorgan 35 klemmt. So können auch die Messerscheiben 30 der äußeren Mähorgane leicht gewechselt werden, und zwar ohne die Notwendigkeit den Antrieb 5 zu demontieren.

### Bezugszeichenliste

- 1: Mähwerk
- 2a: Mähorgan
- 2b: Mähorgan
- 3: Messerscheibe
- 4: Schneidspitze
- 5: Antrieb
- 6: Messerflansch
- 7: Druckscheibe
- 7a: Ausnehmung
- 7b: Vorsprung
- 8: Federelement
- 9: Federelement
- 10: Messerscheiben-Wechselwerkzeug
- 11: Hakenscheibe
- 12: Druckstück
- 13: Schraube
- 14: Ausnehmung
- 15: Schraube
- 16: Räumorgan
- 16a: Abschnitt
- 17: Schraube
- 18: Antriebszahnrad
- 19: Haken
- 20: Ausnehmung
- 21: Rücksprung
- 22: Vorsprung
- 23: Vorsprung
- 24: Bolzen
- 25: Griff
- 26: Schwenkbewegung Messerscheiben-Wechselwerkzeug
- 30: Messerscheibe
- 31: Segment
- 32: Trennstelle
- 33: Klemmstück
- 34: Schraube
- 35: Räumorgan

## Patentansprüche

1. Mähorgan (2a, 2b) eines Mähwerks (1) einer landwirtschaftlichen Erntemaschine,
mit einer Messerscheibe (3), einem Messerflansch (6), einer Druckscheibe (7) und mindestens einem Federelement (8, 9),
wobei der Messerflansch (6) an einer ersten Seite der Messerscheibe (3) angeordnet ist,
wobei die Druckscheibe (7) an einer zweiten Seite der Messerscheibe (3) angeordnet ist,
wobei das mindestens eine Federelement (8, 9) den Messerflansch (6) und die Druckscheibe (7) gegeneinanderdrückt und so die Messerscheibe (3) zwischen dem Messerflansch (6) und der Druckscheibe (7) klemmt,
wobei zum Austausch der Messerscheibe (3) der Messerflansch (6) und die Druckscheibe (7) entgegen der Federkraft des mindestens einen Federelements (8, 9) auseinander drückbar sind, **gekennzeichnet durch**
eine Hakenscheibe (11) und ein Druckstück (12),
wobei die Hakenscheibe (11) und der Messerflansch (6) miteinander verbunden sind,
wobei das Druckstück (12) und die Druckscheibe (7) miteinander verbunden sind,
wobei ein erstes Federelement (8) an einem Abschnitt, der sich durch eine Ausnehmung (14) der Messerscheibe (3) hindurch erstreckt, mit dem Messerflansch (6) und der Hakenscheibe (11) verbunden ist, und
das erste Federelement (8) die Druckscheibe (7) gegen den Messerflansch (6) drückt.

2. Mähorgan nach Anspruch 1, **dadurch gekennzeichnet, dass**
ein zweites Federelement (9) zwischen dem Messerflansch (7) und Druckstück (12) angeordnet ist.

3. Mähorgan nach Anspruch 2, **dadurch gekennzeichnet, dass**
das zweite Federelement (9) den Messerflansch (6) gegen die Druckscheibe (7) drückt.

4. Mähorgan nach einem der Ansprüche 1 bis 3, **dadurch gekennzeichnet, dass**
die Hakenscheibe (11), der Messerflansch (6) und das Druckstück (12) an der ersten Seite der Messerscheibe (3) angeordnet sind.

5. Mähorgan nach einem der Ansprüche 1 bis 4, **dadurch gekennzeichnet, dass**
sich die Hakenscheibe (11) mit einem Haken (19) durch eine Ausnehmung (20) in dem Druckstück (12) hindurch erstreckt.

6. Mähorgan nach Anspruch 5, **dadurch gekennzeichnet, dass**
dann, wenn an dem Haken (19) ein Messerscheiben-Wechselwerkzeug (10) angreift, sich das Messerscheiben-Wechselwerkzeug (10) an der Hakenscheibe (11) und dem Druckstück (12) abstützt,
durch Betätigen des Messerscheiben-Wechselwerkzeugs (10) eine Relativbewegung zwischen der Hakenscheibe (11) und dem Druckstück (12) und ferner eine Relativbewegung zwischen der dem Messerflansch (6) und der Druckscheibe (7) bereitstellbar ist, um die zum Austausch der Messerscheibe (3) den Messerflansch (6) und die Druckscheibe (7) entgegen der Federkraft des mindestens einen Federelements (8, 9) auseinander zu drücken.

7. Mähorgan nach einem der Ansprüche 1 bis 6, **dadurch gekennzeichnet, dass**
die Messerscheibe (3) im Bereich einer Ausnehmung (14) und der Messerflansch (6) jeweils radiale Vorsprünge (22, 23) aufweisen,
in einer ersten Relativposition zwischen Messerscheibe (3) und Messerflansch (6) die radialen Vorsprünge (23) des Messerflanschs (6) die radialen Vorsprünge (22) der Messerscheibe (3) überdecken,
in einer zweiten Relativposition zwischen Messerscheibe (3) und Messerflansch (6) die radialen Vorsprünge (23) des Messerflanschs (6) die radialen Vorsprünge (22) der Messerscheibe (3) nicht überdecken.

8. Mähorgan nach Anspruch 7, **dadurch gekennzeichnet, dass**
die Druckscheibe (7) axiale Vorsprünge (7b) aufweist,
in einer ersten Relativposition und in einer zweiten Relativposition zwischen Messerscheibe (3) und Messerflansch (7) die axialen Vorsprünge (7b) der Druckscheibe (7) in zwischen den radialen Vorsprüngen (22) der Messerscheibe (3) ausgebildete Rücksprünge (21) der Messerscheibe (3) eingreifen.

## Claims

1. Mowing member (2a, 2b) of a mowing mechanism (1) of an agricultural harvesting machine,
having a cutter disk (3), a cutter flange (6), a pressure disk (7) and at least one resilient element (8, 9), wherein the cutter flange (6) is arranged at a first side of the cutter disk (3),
wherein the pressure disk (7) is arranged at a second side of the cutter disk (3),
wherein the at least one resilient element (8, 9) presses the cutter flange (6) and the pressure disk (7) against each other and thus clamps the cutter disk (3) between the cutter flange (6) and the pressure disk (7), wherein, in order to exchange the cutter disk (3), the cutter flange (6) and the pressure disk (7) can be pressed apart from each other counter to the resilient force of the at least one resilient element (8, 9), **characterized by**
a hooked disk (11) and a pressure piece (12),
wherein the hooked disk (11) and the cutter flange (6) are connected to each other,
wherein the pressure piece (12) and the pressure disk (7) are connected to each other,
wherein a first resilient element (8) on a portion which extends through a recess (14) of the cutter disk (3) is connected to the cutter flange (6) and the hooked disk (11), and
the first resilient element (8) presses the pressure disk (7) against the cutter flange (6).

2. Mowing member according to Claim 1, **characterized in that**
a second resilient element (9) is arranged between the cutter flange (7) and the pressure piece (12).

3. Mowing member according to Claim 2, **characterized in that**
the second resilient element (9) presses the cutter flange (6) against the pressure disk (7).

4. Mowing member according to any one of Claims 1 to 3, **characterized in that**
the hooked disk (11), the cutter flange (6) and the pressure piece (12) are arranged at the first side of the cutter disk (3).

5. Mowing member according to any one of Claims 1 to 4, **characterized in that**
the hooked disk (11) extends with a hook (19) through a recess (20) in the pressure piece (12).

6. Mowing member according to Claim 5, **characterized in that**
when a cutter disk exchange tool (10) engages with the hook (19), the cutter disk exchange tool (10) is supported on the hooked disk (11) and the pressure piece (12),
by actuating the cutter disk exchange tool (10), a relative movement between the hooked disk (11) and the pressure piece (12) and furthermore a relative movement between the cutter flange (6) and the pressure disk (7) can be provided in order to press the cutter flange (6) and the pressure disk (7) apart from each other counter to the resilient force of the at least one resilient element (8, 9) in order to exchange the cutter disk (3).

7. Mowing member according to any one of Claims 1 to 6, **characterized in that**
the cutter disk (3) in the region of a recess (14) and the cutter flange (6) each have radial projections (22, 23),
in a first relative position between the cutter disk (3) and the cutter flange (6) the radial projections (23) of the cutter flange (6) cover the radial projections (22) of the cutter disk (3),
in a second relative position between the cutter disk (3) and the cutter flange (6) the radial projections (23) of the cutter flange (6) do not cover the radial projections (22) of the cutter disk (3).

8. Mowing member according to Claim 7, **characterized in that**
the pressure disk (7) has axial projections (7b),
in a first relative position and in a second relative position between the cutter disk (3) and the cutter flange (7) the axial projections (7b) of the pressure disk (7) engage in indentations (21), which are formed between the radial projections (22) of the cutter disk (3), of the cutter disk (3).

## Revendications

1. Organe de fauchage (2a, 2b) d'une faucheuse (1) d'une machine de récolte agricole,
avec un disque tranchant (3), une bride tranchante (6), un disque de pression (7) et au moins un élément de ressort (8, 9),
la bride tranchante (6) étant disposée sur un premier côté du disque tranchant (3),
le disque de pression (7) étant disposé sur un deuxième côté du disque tranchant (3),
l'au moins un élément de ressort (8, 9) poussant la bride tranchante (6) et le disque de pression (7) l'un contre l'autre et bloquant ainsi le disque tranchant (3) entre la bride tranchante (6) et le disque de pression (7), la bride tranchante (6) et le disque de pression (7) pouvant être poussés l'un à l'écart de l'autre à l'encontre de la force de ressort de l'au moins un élément de ressort (8, 9)pour remplacer le disque tranchant (3), **caractérisé par**
un disque à crochet (11) et une pièce de pression (12), le disque à crochet (11) et la bride tranchante (6) étant reliés l'un à l'autre,
la pièce de pression (12) et le disque de pression (7) étant reliés l'un à l'autre,
un premier élément de ressort (8) étant relié à la bride tranchante (6)et au disque à crochet (11) sur une section, qui s'étend à travers un évidement (14) du disque tranchant (3), et
le premier élément de ressort (8) poussant le disque de pression (7) contre la bride tranchante (6).

2. Organe de fauchage selon la revendication 1, **caractérisé en ce que**
un deuxième élément de ressort (9) est disposé entre la bride tranchante (7) et la pièce de pression (12).

3. Organe de fauchage selon la revendication 2, **caractérisé en ce que**
le deuxième élément de ressort (9) pousse la bride tranchante (6) contre le disque de pression (7).

4. Organe de fauchage selon l'une des revendications 1 à 3, **caractérisé en ce que**
le disque à crochet (11), la bride tranchante (6) et la pièce de pression (12) sont disposés sur le premier côté du disque tranchant (3).

5. Organe de fauchage selon l'une des revendications 1 à 4, **caractérisé en ce que**
le disque à crochet (11) s'étend à travers un évidement (20) dans la pièce de pression (12) avec un crochet (19).

6. Organe de fauchage selon la revendication 5, **caractérisé en ce que**
lorsqu'un outil de changement (10) de disques tranchants s'engage sur le crochet (19), l'outil de remplacement (10) de disques tranchants prend appui sur le disque à crochet (11) et sur la pièce de pression (12),
l'actionnement de l'outil de remplacement (10) de disques tranchant permet de fournir un déplacement relatif entre le disque à crochet (11) et la pièce de pression (12), ainsi qu'un déplacement relatif entre la bride tranchante (6) et le disque de pression (7) pour pousser l'un à l'écart de l'autre la bride tranchante (6) et le disque de pression (7) à l'encontre de la force de ressort de l'au moins un élément de ressort (8, 9) pour remplacer le disque tranchant (3).

7. Organe de fauchage selon l'une des revendications 1 à 6, **caractérisé en ce que**
le disque tranchant (3) comporte, dans la zone d'un évidement (14) et de la bride tranchante (6), respectivement des parties faisant saillie radiales (22, 23),
les parties faisant saillie radiales (23) de la bride tranchante (6) recouvrent, dans une première position relative entre le disque tranchant (3) et la bride tranchante (6), les parties faisant saillie radiales (22) du disque tranchant (3),
les parties faisant saillie radiales (23) de la bride tranchante (6) ne recouvrent pas, dans une deuxième position relative entre le disque tranchant (3) et la bride tranchante (6), les parties faisant saillie radiales (22) du disque tranchant (3).

8. Organe de fauchage selon la revendication 7, **caractérisé en ce que**
le disque de pression (7) comporte des parties faisant saillie axiales (7b),
les parties faisant saillie axiales (7b) du disque de pression (7), viennent en prise, dans une première position relative et dans une deuxième position relative entre le disque tranchant (3) et la bride tranchante (7), avec des retraits (21) du disque tranchant (3) formés entre les parties faisant saillie radiales (22) du disque tranchant (3).
